# EUROPEAN PATENT SPECIFICATION

(11) **EP 0 714 746 B1**
(45) Date of publication and mention of the grant of the patent: **18.08.1999**
(21) Application number: 95109880.5
(22) Date of filing: 24.06.1995
(51) Int. Cl.: B29C 45/26

(54) **Disc injection mold apparatus having mold opening guide means**
Plattenspritzgiessvorrichtung mit Führungsmitteln für die Formöffnung
Dispositif de moulage par injection pour disques avec moyens de guidage de l'ouverture de moule

(30) Priority: 30.11.1994 JP 32175894
(43) Date of publication of application: 05.06.1996
(73) Proprietor: SEIKOH GIKEN Co., Ltd., Matsudo-shi, Chiba-ken (JP)
(72) Inventor: Takahashi, Mitsuo, Matsudo-shi, Chiba-ken (JP)
(74) Representative: Hosbach, Hans Ulrich, Dipl.-Ing.

(56) References cited:
- EP-A- 0 247 244
- US-A- 5 388 982
- PATENT ABSTRACTS OF JAPAN vol. 9, no. 194 (M-403) [1917] , 10 August 1985 & JP-A-60 058813 (HITACHI SEISAKUSHO KK), 5 April 1985,
- PATENT ABSTRACTS OF JAPAN vol. 16, no. 561 (M-1341), 3 December 1992 & JP-A-04 216025 (TOSHIBA MACH CO LTD), 6 August 1992,

## Description

### BACKGROUND OF THE INVENTION

### 1. Field of the Invention

The present invention relates to a disc injection mold apparatus having mold opening guide means for preventing the axis displacement between the stationary and movable disc cavity molds caused when mold opening.

More particularly, the present invention relates to a disc injection mold apparatus having mold opening guide means capable of preventing damage of the signal bits transferred to the surface of a molded optical disc due to the axis displacement between the stationary and movable disc cavity molds caused when the mold is opened following the completion of the injection molding.

### 2. Description of the Related Art

For injection molding of a magneto-optical disc, a disc injection mold apparatus which comprises stationary and movable mold bases, cylindrical disc cavity molds provided at the center of each of the bases, and a pair of cylindrical guide rings provided concentrically at the outer peripheries of each of the disc cavity molds as alignment guide means, circumference surface joint sections of each tip ends thereof being male and female tapered fitting surfaces has been used.

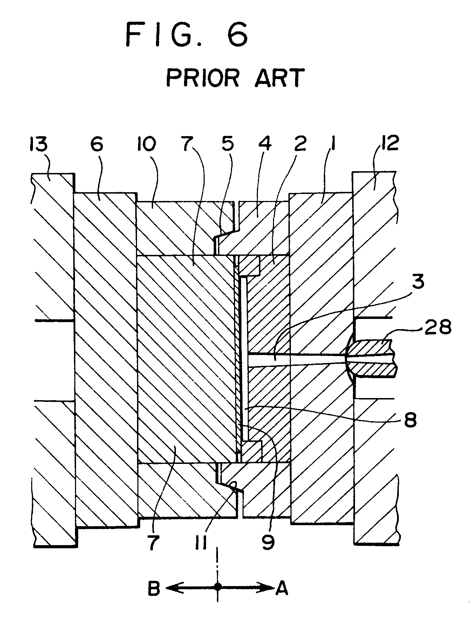

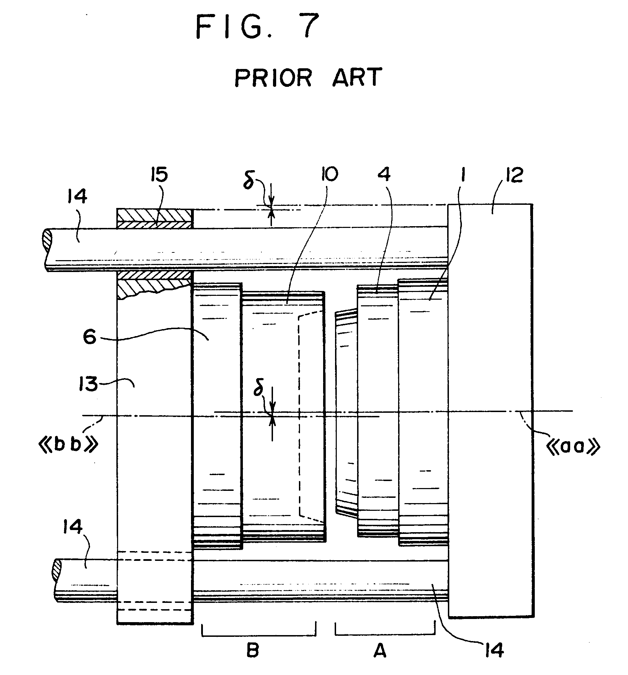

Fig. 6 is a sectional view of the conventional disc injection mold apparatus when mold clamping, and Fig. 7 is a diagram of the conventional apparatus in a state of mold opening for explaining problems thereof.

In these drawings, side A is a stationary mold assembly and side B is a movable mold assembly.

A disc cavity mold 2 is fixed to the stationary mold base 1 of the stationary mold assembly A, and an injection nozzle 3 for injecting a molten resin material is provided at the center thereof. A cylindrical stationary guide ring 4 is integrally fixed to the outer periphery of the stationary mold base 1, and is provided with a male tapered surface 5 at the left end surface thereof with an angle of inclination of 3 to 5 degrees. To a center hole of the stationary mold base 1, resin is supplied from a molding nozzle 28 when injection molding.

A movable disc cavity mold 7 is fixed to the movable mold base 6 of the movable mold assembly B, and a cavity 8 into which a molten resin material is charged is formed between the stationary disc cavity mold 2 and the movable disc cavity mold 7. A stamper plate 9 is made of a pure nickel, and fine signal bits are formed on the surface (right surface in Fig. 6) thereof. The stamper plate 9 is secured to the surface of the movable disc cavity mold 7 with a mounting member (not shown).

A cylindrical movable guide ring 10 is integrally fixed to the outer periphery of the movable mold base 6 or the movable disc cavity mold 7.

A female tapered surface 11 precisely fitting to the male tapered surface 5 of the stationary mold is formed on the right end surface of the cylindrical movable guide ring 10.

The mold assemblies A and B as described above are mounted on a stationary platen 12 and a movable platen 13 of the injection mold machine, respectively.

In a state of mold clamping shown in Fig. 6, the molten resin material is charged into the cavity 8 formed between the cavity molds 2 and 7 at a high pressure and molded so as to transfer the fine signal bits of the stamper plate 9 to the resin molded article. Subsequent to the molding, the movable platen 13 is moved backwardly to perform mold opening, and the entire resin molded article is removed from the mold.

As shown in Fig. 7, in an optical disc injection mold machine in which the movable platen 13 moves horizontally, the movable platen 13 is held by four guide rods 14 and driven by a pressure device such as a toggle mechanism and a hydraulic piston (not shown). In this case, a phenomenon occurs in which an axis of the movable mold assembly B coincided with an axis of the stationary mold assembly A by a tapered surface guide mechanism when mold clamping gradually moves downwardly as the mold opening process proceeds by the deflection value δ according to the downward deflection value δ of the guide rods 14 due to a gap formed between a bearing 15 of the movable platen 13 and the guide rods 14, and to weights of the movable platen 13 and the movable mold assembly B. Generally, the deflection value δ of the injection molding machine having a mold clamping ability of 75 tons or more reaches 50 to 70 µm by actual measurement.

In case of high speed molding of the optical disc, the mold is opened in a state where inside of the resin molded article is partially molten state and the surface thereof is not completely solidified. Thus, the axis displacement between the stationary mold assembly A and the movable mold assembly B should be maintained in zero state until the mold opening distance reaches at least 200 µm. If not, inconvenience such as deformation or double transferring of the fine signal bits transferred to the resin molded article.

For example, if an angle of inclination of the guide ring is 5 degrees, the deflection value δ may reach 17.5 µm in a state where the mold opening distance is 200 µm.

Conversely, in a mold clamping process, the lower portions of each of the tapered guide surfaces are contact loaded for each molding cycle with the total weight of the movable platen 13 and the movable mold assembly B ranging from 300 to 500 kgf as an impact load. Thus, an abnormal wearing and a galling accident of the lower tapered surface tend to occur.

In the optical disc injection molding apparatus, avoiding the use of lubricants is required to prevent impurities from mixing into the cavity 8. To this end, each of the tapered surfaces are subjected to a hardening treatment, a molybdenum disulfide coating treatment and the like.

Occurrence of inconvenience such as deformation or double transferring of the signal bits when the mold opening, and wearing and galling accident of the fitting surfaces occurred when the mold opening and mold clamping is caused by the axis displacement between the molds.

### SUMMARY OF THE INVENTION

It is an object of the present invention to provide a disc injection mold apparatus having mold opening guide means capable of preventing the axis displacement between the stationary and movable disc cavity molds.

In order to achieve the object as described above, according to an aspect of the present invention, there is provided a disc injection mold apparatus having mold opening guide means for opening mold sideways, comprising: stationary and movable mold bases; cylindrical disc cavity molds provided at the center of each of the bases; and a pair of cylindrical guide rings provided concentrically at the outer peripheries of each of the disc cavity molds as alignment guide means, axial hole joint sections of each tip ends thereof being male and female tapered fitting surfaces, wherein a plurality of parallel grooves each having a surface formed by a hard material are provided at the outer diameter surface of one of the guide ring and a plurality of guide blocks each having a surface formed by a hard material and fitting precisely to the parallel groove are formed at the tip end of the outer diameter surface of the other guide ring so that each of the cavity molds are maintained concentrically by a fitting of the guide blocks to the grooves at the time of mold opening.

According to another aspect of the present invention, there is provided a disc injection mold apparatus, wherein the plurality of parallel grooves are a pair of grooves provided at both sides of the outer diameter surface of one of the guide rings.

According to still another aspect of the present invention, there is provided a disc injection mold apparatus, wherein three or more parallel grooves are provided at equal angles on the outer diameter surface of one of the guide rings.

According to further aspect of the present invention, there is provided a disc injection mold apparatus, wherein the guide blocks each having the upper and lower surfaces parallel to the parallel grooves provided at the right and left sides on the outer diameter surface of the one guide ring are made of a wear resistant material and secured to the end surface of the guide ring so as to protrude therefrom.

According to still further aspect of the present invention, there is provided a disc injection mold apparatus, wherein a plate made of a wear resistant material such as cemented carbide is secured to either or both upper and lower surfaces of the parallel grooves provided at right and left sides of the outer diameter surface of other guide ring fitting to the upper and lower surfaces of the guide blocks of the parallel grooves.

According to another aspect of the present invention, there is provided a disc injection mold apparatus, wherein a material to be used for the guide grooves and the guide blocks is a cemented carbide having a rockwell hardness of HRA 83 to 89 and a transverse bending force of 200 kgf/mm².

### BRIEF DESCRIPTION OF THE DRAWINGS

Fig. 1 is a side view showing an embodiment of the stationary guide ring of the mold apparatus according to the present invention;
Fig. 2 is a front view partially in cross section of the above embodiment of the stationary guide ring;
Fig. 3 is a front view partially in cross section of an embodiment of the movable guide ring of the mold apparatus according to the present invention;
Fig. 4 is a side view of the above embodiment of the movable guide ring;
Figs. 5(I) to 5(III) are schematic diagrams for explaining the operation of the mold apparatus according to the present invention;
Fig. 6 is a sectional view of the conventional disc injection mold apparatus in a state of mold clamping; and
Fig. 7 is a diagram of the conventional disc injection mold apparatus shown in a state of mold opening for explaining problems thereof.

### DESCRIPTION OF THE PREFERRED EMBODIMENTS

The present invention will be described more in detail with reference to the drawings.

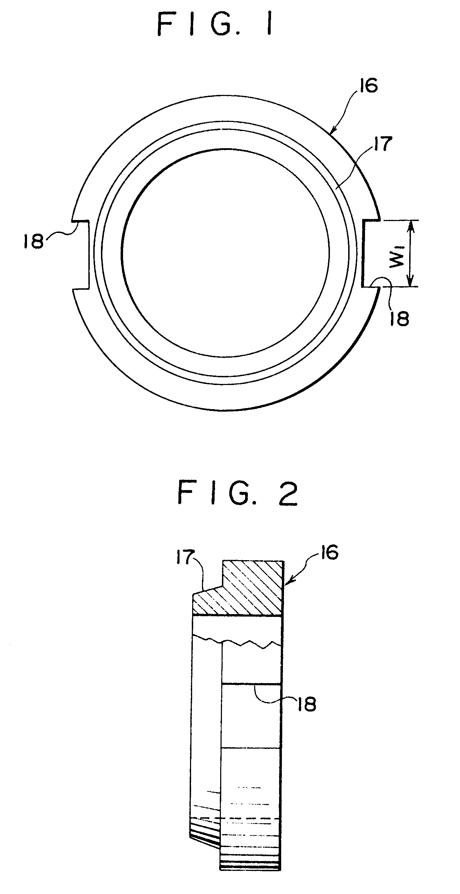

Fig. 1 is a side view showing an embodiment of a stationary guide ring of a mold apparatus according to the present invention, and Fig. 2 is a front view partially in cross section of the above stationary guide ring.

As shown in Fig. 2, a male tapered surface 17 with an angle of inclination of 5 degrees is formed on the left end surface of the stationary guide ring 16. In the drawing, the angle of inclination is exaggerated for the purpose of easy understanding. A pair of precisely worked right and left parallel grooves 18 each having a width W₁ are provided in the outer diameter surface of the stationary guide ring 16, as shown in Fig. 1.

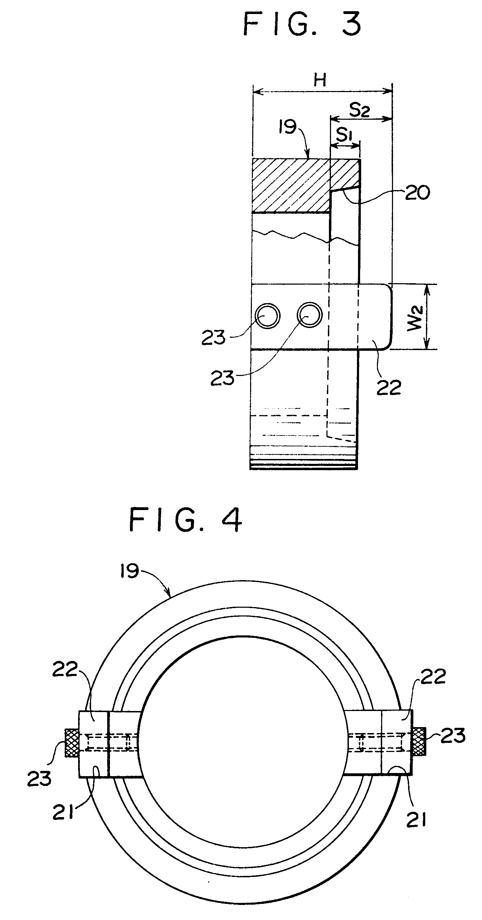

Fig. 3 is a front view partially in cross section of an embodiment of a movable guide ring of the mold apparatus according to the present invention, and Fig. 4 is a side view of the above embodiment of the movable guide ring.

As shown in Fig. 3, a female tapered surface 20 with the same angle of inclination as that of the male tapered surface 17 of the stationary guide ring 16 is formed on the left end circumference section of a cylindrical movable guide ring 19.

A pair of precisely worked right and left parallel grooves 21 each having a width W₁ are provided at positions corresponding to those of the stationary guide ring 16 in the outer diameter surface of the movable guide ring 19. Guide blocks 22 made of superalloy materials each having a width W₂ and a height H are secured to the parallel grooves 21 with check bolts 23, respectively.

The stationary guide ring 16 and the movable guide ring 19 are secured with check bolts (not shown)to the stationary mold base and the movable mold base similar to those of shown in Fig. 6 or Fig. 7, respectively.

The entire contacting surfaces of the upper surfaces of the precisely worked parallel grooves 18 of the stationary guide ring 16 with the upper and lower surfaces of the guide blocks 22 of the movable guide ring 19 are pressure sliding friction surfaces because a tapered surface fitting is not used therefor.

Furthermore, any lubricant can not be used in the optical disc injection mold as described above. Therefore, selection of materials for each sections of the apparatus is an important factor to ensure durable stability of the disc injection mold.

In this embodiment, a cemented carbide having a rockwell hardness of HRA 83 to 89 and a transverse bending force of 200 kgf/mm² is used as a material for the guide blocks 22.

Martensitic stainless steels such as SUS420, SUS440 and the like subjected to a heat treatment so as to be hardened are used as materials of the stationary guide ring 16 and movable guide ring 19, and the stationary guide ring 16 is subjected to wear resistant surface treatment such as molybdenum disulfide coating.

Furthermore, if a rectangular plate made of wear resistant material such as cemented carbide is secured with the check bolt to either or both upper and lower surfaces of the precisely worked parallel grooves 18 of the stationary guide ring 16 coming into contact with the upper and lower surfaces of the guide block 22 made of a cemented carbide material, the wear resistance of the stationary guide ring 16 can be further improved.

The width W₁ of the precisely worked parallel groove 18 of the stationary guide ring 16 and the width W₂ of the guide block 22 of the movable guide ring 19 are precisely produced so that the fitting gap formed therebetween is within 3 µm at normal temperatures.

A fitting length S₂ between the guide block 22 and the parallel groove 18 of the stationary guide ring 16 is set at least over 5 mm longer than the length S₁ of the tapered section so that the guide block 22 precedes the tapered guide surface by 5 mm to be fitted into the precisely worked parallel groove 18 of the stationary guide ring 16.

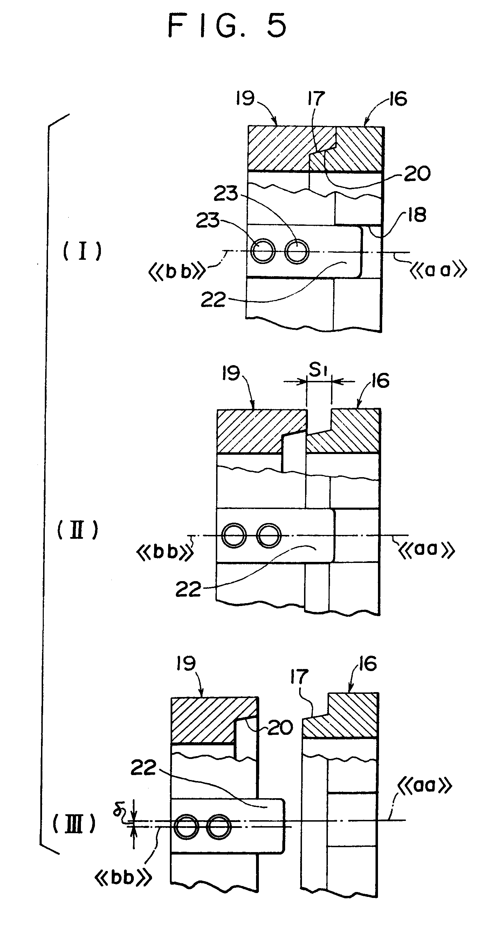

Figs. 5(I) to 5(III) are schematic diagrams which show the operation of the guide mechanism of the disc injection mold apparatus having a mold opening means according to the present invention.

Fig. 5(I) shows a state where the stationary guide ring 16 is joined to the movable guide ring 19 at a mold clamping position. In this state, a tapered guide surfaces 17, 20 and the guide block 22 are simultaneously fitted to and in contact with the parallel groove 18 of the stationary guide ring 16. Therefore, a center line «aa» of the stationary mold assembly A coincide with a center line «bb» of the movable mold assembly B.

Fig. 5(II) shows a state where the mold is opened by very short distance S₁ with the tapered guide surfaces 17 and 20 are held by the guide block 22 so that the center line «aa» of the stationary mold assembly A coincides with the center line «bb» of the movable mold assembly B.

Fig. 5(III) shows a state of a moment the mold opening distance exceeds S₂, whereby the guide block 22 of the movable mold assembly B is separated from the parallel grooves 18 of the stationary guide ring 16. In this case, the center line «bb» of the movable mold assembly B rapidly moves downwardly by the above-mentioned deflection value δ so as to be displaced with respect to the center line «aa» of the stationary mold assembly A.

As described above, the center line «aa» of the stationary mold assembly A coincides with the center line «bb» of the movable mold assembly B so that the axis displacement therebetween can be maintained in zero state.

It will be appreciated that various modifications may be made to the above embodiment without departing from the scope of the present invention.

For example, by providing three or more pairs of guide blocks and precisely worked parallel grooves radially with respect to the guide ring, the longitudinal and transverse axis displacement between the stationary and movable mold assemblies A and B can be simultaneously controlled.

In the disc injection mold apparatus having mold opening guide means according to the present invention, the guide mechanism capable of moving horizontally the stationary and movable molds is provided to prevent the longitudinal axis displacement between the stationary and movable molds caused when the mold is opened following the injection molding. Therefore, displacements of the fine signal bits transferred to the optical disc molded article and quality deterioration of the molded substance due to double transferring can be prevented.

Since the cemented carbide is used for either or both of the guide blocks and guide groove surfaces, the guide block and guide groove have durable stability in point of wear resistance even in an environment where lubricants can not be used.

The guide rings are equipped with all the guide mechanisms composed of the guide blocks and guide groove surfaces. Thus, the additional volume increase of the mold is not required, whereby a compact and lightweight mold can be designed.

Furthermore, there is no necessary to change the structure of the injection molding machine. Therefore, the disc injection mold apparatus having mold opening means according to the present invention can be provided by improving only guide ring sections of the conventional apparatus.

## Claims

1. A disc injection mold apparatus having mold opening guide means for opening mold sideways, comprising:
stationary and movable mold bases (1,6);
cylindrical disc cavity molds (2,7) provided at the center of each of said bases (1,6); and
a pair of cylindrical guide rings (16,19) provided concentrically at the outer peripheries of each of said disc cavity molds (2,7) as alignment guide means, axial hole joint sections of each tip ends thereof being male and female tapered fitting surfaces (17,20),
wherein a plurality of parallel grooves (18) each having a surface formed by a hard material are provided at the outer diameter surface of one of said guide ring (16) and a plurality of guide blocks (22) each having a surface formed by a hard material and fitting precisely to said parallel groove (18) are formed at the tip end of the outer diameter surface of the other guide ring (19) so that each of said cavity molds (2,7) are maintained concentrically by a fitting of said guide blocks (22) to said grooves (18) at the time of mold opening.

2. A disc injection mold apparatus having mold opening guide means according to claim l, wherein said plurality of parallel grooves (18) are a pair of grooves provided at both sides of the outer diameter surface of one of said guide rings (16).

3. A disc injection mold apparatus having mold opening guide means according to claim 1, wherein three or more parallel grooves (18) are provided at equal angles on the outer diameter surface of one of said guide rings (19).

4. A disc injection mold apparatus having mold opening guide means according to any of claims l to 3, wherein said guide blocks (22) each having the upper and lower surfaces parallel to said parallel grooves (18) provided at the right and left sides on the outer diameter surface of said one guide ring (16) are made of a wear resistant material and secured to the end surface of said guide ring (19) so as to protrude therefrom.

5. A disc injection mold apparatus having mold opening guide means according to any of claims 1 to 4, wherein a plate made of a wear resistant material such as cemented carbide is secured to either or both upper and lower surfaces of said parallel grooves (18) provided at right and left sides of the outer diameter surface of other guide ring (16) fitting to the upper and lower surfaces of said guide blocks (22) of said parallel grooves.

6. A disc injection mold apparatus having mold opening guide means according to any of claims 1 to 5, wherein a material to be used for said guide grooves (18) and said guide blocks (22) is a cemented carbide having a rockwell hardness of HRA 83-89 and a transverse bending force of 200 kgf/mm².

## Patentansprüche

1. Platten-Spritzgießvorrichtung mit Formöffnungs-Führungsmitteln zum seitlichen Öffnen der Form und mit:
stationären und beweglichen Form-Grundplatten (1, 6);
zylindrischen Plattenhohlformen (2, 7), die im Zentrum jeder der Grundplatten (1,6) angeordnet sind; und
einem Paar von zylindrischen Führungsringen (16, 19), die als Ausricht-Führungsmittel konzentrisch auf dem Außenumfang von jeder Plattenhohlform (2, 7) angeordnet sind, wobei axiale Öffnungs-Verbindungsabschnitte an jedem ihrer vorderen Enden schräge äußere und innere Paßflächen (17, 20) bilden,
wobei eine Mehrzahl von Parallelnuten (18), die jeweils eine Fläche aus einem harten Material aufweisen, auf der äußeren Umfangsfläche von einem der Führungsringe (16) angeordnet ist, und wobei eine Mehrzahl von Führungsblöcken (22), die jeweils eine Fläche aus einem harten Material aufweisen und genau in die Parallelnuten (18) passen, an dem vorderen Ende der äußeren Umfangsfläche des anderen Führungsrings gebildet sind, derart, daß jede Hohlform (2, 7) durch eine Passung zwischen den Führungsblöcken (22) und den Nuten (18) zum Zeitpunkt der Formöffnung konzentrisch bleibt.

2. Platten-Spritzgießvorrichtung mit Formöffnungs-Führungsmitteln nach Anspruch 1, wobei die Mehrzahl von Parallelnuten (18) als Nutenpaar auf beiden Seiten der äußeren Umfangsfläche eines der Führungsringe (16) angeordnet sind.

3. Platten-Spritzgießvorrichtung mit Formöffnungs-Führungsmitteln nach Anspruch 1, wobei drei oder mehr Parallelnuten (18) in gleichem Winkelabstand auf der äußeren Umfangsfläche eines der Führungsringe (16) angeordnet sind.

4. Platten-Spritzgießvorrichtung mit Formöffnungs-Führungsmitteln nach einem der Ansprüche 1 bis 3, wobei die Führungsblöcke (22), deren jeder mit seinen oberen und unteren Flächen parallel zu den auf der rechten und auf der linken Seite der äußeren Umfangsfläche des einen Führungsrings (16) angeordneten Parallelnuten ausgerichtet ist, aus einem verschleißfesten Material bestehen und an dem vorderen Ende des Führungsrings (19) befestigt sind, um von diesem abzustehen.

5. Platten-Spritzgießvorrichtung mit Formöffnungs-Führungsmitteln nach einem der Ansprüche 1 bis 4, wobei eine Platte aus einem verschleißfesten Material, wie zum Beispiel Hartmetall, auf den oberen und/oder unteren Flächen der Parallelenuten (18) befestigt ist, die auf der rechten und linken Seite der äußeren Umfangsfläche des anderen Führungsrings (16) angeordnet sind, und zwar passend auf die oberen und unteren Flächen der Führungsblöcke (22) der Parallelnuten.

6. Platten- und Spritzgießvorrichtung mit Formöffnungs-Führungsmitteln nach einem der Ansprüche 1 bis 5, wobei für die Führungsnuten (18) und die Führungsblöcke (22) ein Hartmetall verwendet wird mit einer Rockwell-Härte von HRA 83-89 und einer Biegefestigkeit von 200 kgf/mm².

## Revendications

1. Appareil de moulage par injection de disques ayant des moyens de guidage d'ouverture de moule pour l'ouverture du moule latéralement, comprenant :
des châssis fixe et mobile (1, 6),
des matrices à cavité à disque cylindriques (2, 7) prévues au centre de chacun desdits châssis (1, 6), et
une paire d'anneaux de guidage cylindriques (16, 19) prévus concentriquement aux périphéries extérieures de chacune desdites matrices à cavité à disque (2, 7) comme moyens de guidage d'alignement, des parties de joint de trou axial de chaque extrémité de ceux-ci étant des surfaces d'ajustement coniques mâle et femelle (17, 20),
dans lequel plusieurs rainures parallèles (18) ayant chacune une surface formée d'une matière dure sont prévues à la surface de diamètre extérieur d'un desdits anneaux de guidage (16) et plusieurs blocs de guidage (22) ayant chacun une surface formée d'une matière dure et s'ajustant avec précision à ladite rainure parallèle (18) sont formés à l'extrémité de la surface de diamètre extérieur de l'autre anneau de guidage (19) de façon que chacune desdites matrices à cavité (2, 7) soit maintenue concentriquement par un ajustement desdits blocs de guidage (22) auxdites rainures (18) au moment de l'ouverture du moule.

2. Appareil de moulage par injection de disques ayant des moyens de guidage d'ouverture de moule selon la revendication 1, dans lequel les rainures parallèles (18) sont une paire de rainures prévues sur les deux côtés de la surface de diamètre extérieur d'un desdits anneaux de guidage (16).

3. Appareil de moulage par injection de disques ayant des moyens de guidage d'ouverture de moule selon la revendication 1, dans lequel trois ou plus de trois rainures parallèles (18) sont prévues à des angles égaux sur la surface de diamètre extérieur d'un desdits anneaux de guidage (19).

4. Appareil de moulage par injection de disques ayant des moyens de guidage d'ouverture de moule selon l'une des revendications 1 à 3, dans lequel lesdits blocs de guidage (22) ayant chacun les surfaces supérieure et inférieure parallèles auxdites rainures parallèles (18) prévues sur les côtés droit et gauche sur la surface de diamètre extérieur d'un anneau de guidage (16) sont faits d'une matière résistant à l'usure et fixés à la surface d'extrémité dudit anneau de guidage (19) de façon à saillir de celui-ci.

5. Appareil de moulage par injection de disques ayant des moyens de guidage d'ouverture de moule selon l'une des revendications 1 à 4, dans lequel une plaque faite d'une matière résistant à l'usure telle que carbure cémenté est fixée soit à une des surfaces supérieure et inférieure, soit aux deux, desdites rainures parallèles (18) prévues sur les côtés droit et gauche de la surface de diamètre extérieur de l'autre anneau de guidage (16) s'ajustant aux surfaces supérieure et inférieure desdits blocs de guidage (22) desdites rainures parallèles.

6. Appareil de moulage par injection de disques ayant des moyens de guidage d'ouverture de moule selon l'une des revendications 1 à 5, dans lequel une matière utilisable pour lesdites rainures de guidage (18) et lesdits blocs de guidage (22) est un carbure cémenté ayant une dureté Rockwell HRA de 83 à 89 et une force de flexion transversale de 200 kgf/mm².
